(19) **Europäisches Patentamt**
**European Patent Office**
**Office européen des brevets**

(11) **EP 3 846 338 B1**

(12) **EUROPEAN PATENT SPECIFICATION**

(45) Date of publication and mention
of the grant of the patent:
**20.08.2025 Bulletin 2025/34**

(21) Application number: **19220223.2**

(22) Date of filing: **31.12.2019**

(51) International Patent Classification (IPC):
***H02S 50/00*** *(2014.01)*

(52) Cooperative Patent Classification (CPC):
**H02S 50/00;** Y02E 10/50

(54) **A METHOD OF DETECTING AND IDENTIFYING A MALFUNCTION OF A PHOTOVOLTAIC INSTALLATION**

VERFAHREN ZUR ERKENNUNG UND IDENTIFIZIERUNG EINER STÖRUNG EINER PHOTOVOLTAISCHEN INSTALLATION

PROCÉDÉ DE DÉTECTION ET D'IDENTIFICATION D'UN DYSFONCTIONNEMENT D'UNE INSTALLATION PHOTOVOLTAÏQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.07.2021 Bulletin 2021/27**

(73) Proprietor: **MARICI Holdings The Netherlands B.V.**
**3068AX Rotterdam (NL)**

(72) Inventors:
• **Firla, Marcin**
**43-200 Pszczyna (PL)**

• **Orkisz, Michal**
**31-352 Krakow (PL)**
• **Ottewill, James**
**31-143 Krakow (PL)**

(74) Representative: **Kolster Oy Ab**
**Salmisaarenaukio 1**
**P.O. Box 204**
**00181 Helsinki (FI)**

(56) References cited:
**US-A1- 2011 184 583    US-A1- 2014 188 410**

**Description**

The invention relates to a method of detecting a malfunction of a photovoltaic installation on a basis of a generated power value. Furthermore the method allows to identify the reason of the malfunction of the photovoltaic installation.

Document US2014188410A1 discloses methods of calibrating photovoltaic model parameters to improve modeling accuracy of photovoltaic power production, methods for determining as-built photovoltaic production expectations, methods for determining weather-adjusted photovoltaic performance, methods for determining and quantifying energy losses due to equipment mismatch, methods for determining and quantifying energy losses due to snow, methods for determining and quantifying energy losses due to equipment downtime, methods for determining and quantifying energy losses due to shading, and methods for determining and quantifying energy losses due to soiling and equipment degradation.

Document EP0677749A2 discloses a solution to accurately detect a defective photoelectric conversion element regardless of the installation place and notify the corresponding information. The above object can be achieved by a power generating system having a solar cellarray constituted by a plurality of parallel-connected solar cell strings each consisting of a plurality of series-connected solar cell modules. The system includes electrical parameter detection units for measuring electrical parameters in solar cell strings, a comparing unit for comparing the detected electrical parameters mutually, and a warning unit for warning an abnormality on the basis of the comparison result.

Document EP2293089A1 discloses a string malfunction monitoring. In order to monitor a plurality of strings of a photovoltaic system connected to an inverter, the currents flowing at measuring times or during measuring periods from the individual strings to the inverter are measured and converted into a Measuring time or during a measurement period of the individual strings flowed flows each determines a reference current. The currents flowing from the individual strings are normalized to the reference current determined for the measuring time or measuring period. For the analysis of the long-term curves of normalized currents flowing within the representative time periods of the individual strings, comparison values applied to the individual strings are updated by using the normalized currents flowing from the individual strings within the representative time periods updated comparison values and these corresponding values of the normalized currents flowing from the individual strings within the last representative period, and a sum of the differences formed is continuously compared for each string with a limit value for the string.

Document JP2012054401 A discloses a solar energy generation diagnostic system. To provide a photovoltaic power generation diagnostic apparatus capable of more reliable failure diagnosis with a relatively simple configuration. Power generation information, solar radiation information, and temperature information are acquired, the information is stored, a system output coefficient in a diagnosis time zone is calculated, and stored together with the temperature in the diagnosis time zone. A prediction formula is derived from the system output coefficient before the day to be diagnosed, and the prediction system output coefficient is calculated from the temperature in the diagnosis time zone on the day to be diagnosed using the prediction formula. Further, the system output coefficient of the day to be diagnosed is read as the actual system output coefficient. When the difference between the predicted system output coefficient and the actual system output coefficient is greater than or equal to a certain value, it is diagnosed and displayed that the solar power generation system has failed.

Document JP2012124188A discloses an information acquisition unit that acquires time-series data of the power generation amount of the solar power generation apparatus installed at a plurality of points, predetermined time-series data corresponding to the solar power generation apparatus at a predetermined position among the time-series data, and other A similarity determination unit that determines a similarity by comparing a variation pattern with other time-series data corresponding to a photovoltaic power generation device at a position, and the other time-series data determined to be similar by the similarity determination A photovoltaic power generation amount prediction device, comprising: a power generation amount prediction unit that predicts the power generation amount of the photovoltaic power generation device according to the predetermined time series data.

A method of detecting and identifying a malfunction of a photovoltaic installation, comprising a single photovoltaic panel or a set of connected photovoltaic panels, according to the invention, comprises steps of obtaining a generated power value of the photovoltaic installation, obtaining an estimated power of the photovoltaic installation, is characterized in that it further comprises the steps of: obtaining a solar time of a location of the photovoltaic installation, extracting a sunrise and a sunset of a location of the photovoltaic installation for each day, computing one or more Key Performance Indicator(s), KPIs, based on the generated power value of the photovoltaic installation and the estimated power of the photovoltaic installation, identifying if any of the computed KPIs is exceeding a predefined threshold, and taking action based on at least one of the computed KPIs. The method of the invention is characterized by what is stated in independent claim 1. The preferred embodiments of the invention are disclosed in the dependent claims.

Preferably, the method is characterized in that the step of taking action based on at least one of the computed KPIs comprises at least one of the following actions: plotting at least one KPI as a function of time and indicating if the KPI value is exceeding a predefined threshold, setting an alarm, diagnosing root cause of the system underperformance,

planning maintenance actions, and/or turning on an additional power source to compensate lower power generated by the photovoltaic installation.

Preferably, the method is characterized in that the method further comprises a step of normalizing the generated power value of the photovoltaic installation, preferably calculated with a formula

$$\widetilde{x_k} = \frac{x_k - \hat{x}_k}{\hat{x}_k}$$

wherein $x_k$ is a single data related to the generated power value of the photovoltaic installation on the kth day, and $\hat{x}_k$ is a single data related to the estimated power value of the photovoltaic installation on the kth day, preferably $\widetilde{x_k}$ with values lower than 2% of the generated power values are replaced by zeros.

In such case, preferably, method is characterized in that at least one of the computed KPIs defines a reduced power production, preferably this KPI is calculated with a formula

$$KPI_k[11] = \begin{cases} \dfrac{\overline{\widetilde{x}_k}}{0,1}, \sigma_k < 0,1 \\ \dfrac{\overline{\widetilde{x}_k}}{\sigma_k}, \sigma_k \geq 0,1 \end{cases}$$

wherein standard deviation $\sigma_k$ of the normalized power is calculated with a formula

$$\sigma_k = \sqrt{\frac{\sum_{i=1}^{N}\left(\check{x}_{k_i} - \overline{\widetilde{x}_k}\right)^2}{N-1}}$$

Preferably, the method is characterized in that at least one of the computed KPIs defines the difference between predicted and measured time of the sunrise, preferably this KPI is calculated with a formula

$$KPI_k[1] = \hat{\tau}_k[r] - \tau_k[r]$$

wherein $\hat{\tau}_k[r]$ is the predicted time of the sunrise and $\tau_k[r]$ is the measured time of the sunrise, and even more preferably the predicted time of the sunrise is calculated with a Clear Sky Model and the measured time of the sunrise is calculated with a formula

$$\tau_k[r] = \tau_k[n] + (\tau_k[n+1] - \tau_k[n])\frac{T_k - x_k[n]}{x_k[n+1] - x_k[n]}$$

wherein $\tau_k[r]$ is time of the sunrise on the kth day, $\tau_k[n]$ and $\tau_k[n+1]$ constitute such a pair that $\tau_k[n]$ is a time of a measurement during the kth day with generated power value lower than $T_k$ and $\tau_k[n+1]$ is a time of a subsequent measurement with the generated power value greater than $T_k$, and $T_k$ is equal to $0,1 \cdot p90_k$, wherein $p90_k$ is a 90th percentile computed on the generated power value and $x_k[n]$ is a single nth data related to the generated power value of the photovoltaic installation on the kth day, wherein preferably a 24 hour day is converter into a day time which has value from 0 to 1, wherein a value of 0,5 means time of a solar noon.

Preferably, the method is characterized in that at least one of the computed KPIs defines the difference between predicted and measured time of the sunset, preferably this KPI is calculated with a formula

$$KPI_k[2] = \hat{\tau}_k[s] - \tau_k[s]$$

wherein $\hat{\tau}_k[s]$ is the predicted time of the sunset and $\tau_k[s]$ is the measured time of the sunset, and even more preferably the predicted time of the sunset is calculated with a Clear Sky Model and the measured time of the sunset is calculated with a formula

$$\tau_k[s] = \tau_k[n] + (\tau_k[n+1] - \tau_k[n]) \frac{T_k - x_k[n]}{x_k[n+1] - x_k[n]}$$

wherein $\tau_k[s]$ is time of the sunset on the k$^{th}$ day, $\tau_k[n]$ and $\tau_k[n+1]$ constitute such a pair that $\tau_k[n]$ is a time of a measurement during the k$^{th}$ day with generated power value greater than $T_k$ and $\tau_k[n+1]$ is a time of a subsequent measurement with the generated power value lower than $T_k$, and $T_k$ is equal to $0{,}1 \cdot p90_k$ and , wherein $p90_k$ is a 90$^{th}$ percentile computed on the generated power value and $x_k[n]$ is a single n$^{th}$ data related to the generated power value of the photovoltaic installation on the k$^{th}$ day, wherein preferably a 24 hour day is converter into a day time which has value from 0 to 1, wherein a value of 0,5 means time of a solar noon.

Preferably, the method is characterized in that at least one of the computed KPIs defines a day length difference, which is a difference between a predicted day length and a measured day length, preferably the day length difference is calculated with a formula

$$KPI_k[3] = (\hat{\tau}_k[s] - \hat{\tau}_k[r]) - (\tau_k[s] - \tau_k[r])$$

wherein the $\hat{\tau}_k[s]$ is predicted time of the sunset, $\hat{\tau}_k[r]$ is a predicted time of a sunrise, $\tau_k[s]$ is time of the sunset on the k$^{th}$ day, and $\tau_k[r]$ is time of the sunrise on the k$^{th}$ day, wherein preferably a 24 hour day is converter into a day time which has value from 0 to 1, wherein a value of 0,5 means time of a solar noon.

Preferably, the method is characterized in that at least one histogram-based KPI is used to detect limitation of the generated power value of the photovoltaic installation, wherein a histogram of signal x'$_k$ corresponding to the generated power value during the k$^{th}$ day is calculated, preferably without first 10% and last 10% of data corresponding to the generated power value of the photovoltaic installation in a time soon after the sunrise or before the sunset and even more preferably a single zero value is added to the signal x'$_k$, wherein histogram preferably divides data into 200 bins, and wherein the KPI is preferably calculated with a formula

$$KPI_k[4] = \frac{10 \cdot h[200]^2}{\sum_{i=191}^{200} h[i]}$$

wherein h[i] is an i$^{th}$ element of the histogram.

Preferably, the method is characterized in that at least one of the computed KPIs is used to detect a daily jitter, the KPI is preferably calculated with a formula

$$KPI_k[5] = \sqrt{\frac{\sum_{i=1}^{N} \left(dx_{k_i} - \overline{dx_k}\right)^2}{N-1}} - \sqrt{\frac{\sum_{i=1}^{N} \left(d\hat{x}_{k_i} - \overline{d\hat{x}_k}\right)^2}{N-1}}$$

wherein $dx_k$ is a single data related to an approximate derivative of the generated power value of the photovoltaic installation on the k$^{th}$ day, and $d\hat{x}_k$ is a single data related to an approximate derivative of the estimated power value of the photovoltaic installation on the k$^{th}$ day.

Preferably, the method is characterized in that at least one of the computed KPIs is used to detect the difference between generated and estimated power value of the photovoltaic installation, preferably calculated with a formula

$$KPI_k[6] = \frac{1}{n} \sum_{i=1}^{n} \left| x_{k_i} - \hat{x}_{k_i} \right|$$

wherein $x_k$ is a single data related to the generated power value of the photovoltaic installation on the k$^{th}$ day, and $\hat{x}_k$ is a single data related to the estimated power value of the photovoltaic installation on the k$^{th}$ day.

Preferably, the method is characterized in that at least one of the computed KPIs is used to detect a power shape asymmetry between morning and evening in relation to estimated power value of the photovoltaic installation, preferably this KPI is calculated with a formula

$$KPI_k[7] = \frac{1}{n}\sum_{i=1}^{n}\left|x_{ke_i} - \hat{x}_{ke_i}\right| - \frac{1}{n}\sum_{i=1}^{n}\left|x_{km_i} - \hat{x}_{km_i}\right|$$

wherein $x_{ke_i}$ is a single $i^{th}$ data related to the generated power value of the photovoltaic installation after solar noon on the $k^{th}$ day, $\hat{x}_{ke_i}$ is a single $i^{th}$ data related to the estimated power value of the photovoltaic installation after solar noon on the $k^{th}$ day, $x_{km_i}$ is a single $i^{th}$ data related to the generated power value of the photovoltaic installation before solar noon on the $k^{th}$ day, and $\hat{x}_{km_i}$ is a single $i^{th}$ data related to the estimated power value of the photovoltaic installation before solar noon on the $k^{th}$ day, preferably the lowest 5% of power values and the highest 5% of power values are not used during calculation of this KPI. The method is characterized in that at least one of the computed KPIs determines the difference between the generated power value of the photovoltaic installation and the estimated power of the photovoltaic installation during morning, preferably this KPI is calculated with a formula

$$KPI_k[8] = \frac{\hat{\tau}_k[2] - \hat{\tau}_k[1]}{2N}\sum_{n=1}^{N}(x_k[n] - \hat{x}_k[n]) + (x_k[n+1] - \hat{x}_k[n+1])$$

wherein $\hat{\tau}_k[1]$ is a time of a first estimated power value greater than the threshold T and $\hat{\tau}_k[2]$ is a time when the estimated power value stops increasing, $x_k[n]$ is a single $n^{th}$ data related to the generated power value of the photovoltaic installation on the $k^{th}$ day and $\hat{x}_k[n]$ is a single $n^{th}$ data related to the estimated power value of the photovoltaic installation on the $k^{th}$ day, wherein preferably a 24 hour day is converter into a day time which has value from 0 to 1, wherein a value of 0,5 means time of a solar noon.

Preferably, the method is characterized in that at least one of the computed KPIs determines the difference between the generated power value of the photovoltaic installation and the estimated power of the photovoltaic installation during evening, preferably this KPI is calculated with a formula

$$KPI_k[9] = \frac{\hat{\tau}_k[4] - \hat{\tau}_k[3]}{2N}\sum_{n=1}^{N}(x_k[n] - \hat{x}_k[n]) + (x_k[n+1] - \hat{x}_k[n+1])$$

wherein $\hat{\tau}_k[3]$ is a time of a first estimated power value which starts to decreasing and $\hat{\tau}_k[4]$ is a time of a last estimated power value greater than the threshold T, $x_k[n]$ is a single $n^{th}$ data related to the generated power value of the photovoltaic installation on the $k^{th}$ day and $\hat{x}_k[n]$ is a single $n^{th}$ data related to the estimated power value of the photovoltaic installation on the $k^{th}$ day, wherein preferably a 24 hour day is converter into a day time which has value from 0 to 1, wherein a value of 0,5 means time of a solar noon.

Preferably, the method is characterized in that at least one of the computed KPIs is used to detect days with zero power production, preferably this KPI is calculated with a formula

$$KPI_k[10] = \frac{n_k - m_k}{n_k}$$

wherein $n_k$ is a number of measured samples of the generated power value of the photovoltaic installation and $m_k$ is a number of non-zero values of measured samples of the generated power value of the photovoltaic installation.

Preferably, the method is characterized in that all KPIs have the same threshold value, preferably the threshold value is 1.

Preferably, the method is characterized in that the method further comprises a step of splitting the generated power value of the photovoltaic installation by days.

Preferably, the method is characterized in that the one or more KPIs are calculated for each full day separately, wherein selected KPIs are computed on time series data and subsequently the selected KPIs are compared with threshold values to detect days when the inverter does not work as expected.

Preferably, the method is characterized in that one or more from the following malfunctions are detected: Zero Production, Reduced Production, Limiting, Fluctuation, Asymmetry, Unusual Power, Shape, Start-Up Anomaly, Shut-Down Anomaly.

Preferably, the method is characterized in that one or more KPIs are visualized and then displayed or printed.

The present invention will be presented in preferred embodiments with reference to the enclosed figures, on which

Fig. 1 presents the method of detecting and identifying a malfunction of a photovoltaic installation,

Fig. 2 presents a detailed view of correct data,

Fig. 3 presents a detailed view of detected data quality problem,

Fig. 4 presents a detailed view of detected limited energy output,

Fig. 5 presents a detailed view of detected daily jitter,

Fig. 6 presents a detailed view of detected asymmetry(morning/afternoon estimated shape asymmetry),

Fig. 7 presents a detailed view of detected morning residual from modeled,

Fig. 8 presents a detailed view of detected evening residual from modeled,

Fig. 9 presents a detailed view of detected zero power production,

Fig. 10 presents a detailed view of detected reduced power production.

The proposed fault diagnosis method is designed to work on the basis of the DC power input to an inverter. Multiple strings may be evaluated by considering the power measured at each DC/DC booster (Maximum Power Point Tracking or MPPT) stage of an inverter. The solution may also be adapted to work for power measured at the output of an inverter, or using other power measured at other parts of the system (e.g. at each panel, string, stringbox, etc.). It could be especially of interest for clients having a large plant portfolio; whilst the proposed method may be applied (and may be offered) for any photovoltaic system, regardless of size or application it is foreseen that the method will be best suited for quick and precise evaluation of vast and distributed photovoltaic plants by personnel with basic domain knowledge (i.e. utility and commercial rooftop markets).

The invention covers the approach for comparing inverters performance across a fleet, identifying anomalies and classifying them to a predefined malfunction type.

The first feature, fleet benchmarking, is designed in such a way that it is possible to compare inverters independently of the location and rated power production of the plant. It is achieved by using solar time to express the location of the Sun for a given longitude and latitude.

The second feature, malfunction type detection, is obtained by evaluating data on a daily basis, meaning that for each day separately a set of key performance indicators (KPIs) is computed. The flowchart of the idea is presented in the figure above.

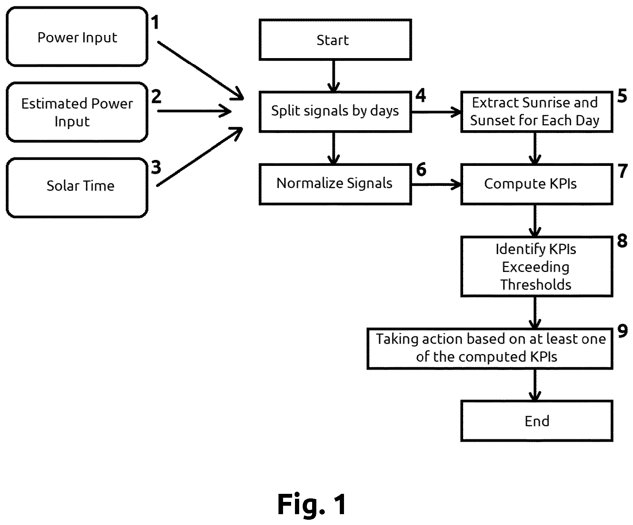

On a fig. 1 a preferred embodiment of the method is presented. At the beginning a power input S1, estimated power input S2 and a solar time S3 are provided. In a next step S4 signals related to the power input and the estimated power input are splinted by days. Preferably the signals may be normalize in step S6. A sunrise and a sunset are extracted for each day in step S5 and at least one KPI is computed in step S7. In a next step S8 it is identified whether any one of the KPIs have exceeded a threshold value and on this basis, in step S9, an action is taken.

The action from step S9 may be taken when at least one of the KPIs have exceeded the threshold value or none of the KPIs have exceeded the threshold value.

Let $x_k$ be the measured DC power input value during $k^{th}$ day - the power input. In preferred embodiment the 24-hour duration of a day is linearly transformed using local solar time to have a value from 0 to 1, such that a solar time equal to 0.5 corresponds to a time during the day when the Sun is exactly above the same meridian as the power plant under consideration is located. In other words, the Sun's azimuth angle is equal to 180°.

Let $\hat{x}_k$ be a modeled value of DC power input- the estimated power input. This estimated value could be computed from irradiance given by the clear sky model directly, or medium / maximum value measured on one of many photovoltaic arrays available on the plant under inspection. The modeled value could be also computed using neural network trained on historical data. In the further steps, a model for estimating DC power that is based on the irradiance measurement is used.

Moreover, the sunrise $\hat{\tau}_k[r]$ and the sunset $\hat{\tau}_k[s]$ of $k^{th}$ day are preferably calculated using the Clear Sky Model. These moments in time are evaluated for the inspected location and correspond respectively to the time when the disk of the Sun is starting to appear above the horizon and finishing when the disk falls below it.

The first group of KPIs is preferably focused on the time of energy production during the day and when it starts and finishes. To do so, the $90^{th}$ percentile $p90_k$ is computed on the measured power and the threshold value $T_k$ is defined in the following manner:

$$0{,}1 \cdot p90_k$$

In the next step, the time of sunrise $\tau_k[r]$ and sunset $\tau_k[s]$ are preferably linearly interpolated as follows:

$$\tau_k[r] = \tau_k[n] + (\tau_k[n+1] - \tau_k[n])\frac{T_k - x_k[n]}{x_k[n+1] - x_k[n]}$$

where n and n + 1 constitute such a pair that n is the first measurement during the $k^{th}$ day with value lower than Tk and n + 1 has value greater than Tk;

$$\tau_k[s] = \tau_k[n] + (\tau_k[n+1] - \tau_k[n])\frac{T_k - x_k[n]}{x_k[n+1] - x_k[n]}$$

where n and n + 1 constitute such a pair that n is the last measurement during the $k^{th}$ day with value greater than $T_k$ and n + 1 has value lower than $T_k$.

Those values are preferably used to compute the following KPIs.

· Sunrise difference from modeled:

$$KPI_k[1] = \hat{\tau}_k[r] - \tau_k[r]$$

· Sunset difference from modeled:

$$KPI_k[2] = \hat{\tau}_k[s] - \tau_k[s]$$

· Day length difference from modeled:

$$KPI_k[3] = (\hat{\tau}_k[s] - \hat{\tau}_k[r]) - (\tau_k[s] - \tau_k[r])$$

These KPIs can be indicative of various problems, for example improperly configured activation voltages, or shading. The value calculated of the above-described KPIs is not related to the amplitude of the measured signal. It is why the result is the same no matter if the measured signal or its scaled version is used. This is not the case for all the other proposed KPIs. Therefore, the measured signal $x_k$ is linearly scaled to have values between 0 and 1. This signal is denoted as $x'_k$ This is crucial for benchmarking functionality and comparisons of results from different photovoltaic plants.

The next KPI is preferably designed to detect limiting of measured power which can occur in the case of inverter clipping, where the DC power generated by the photovoltaic panels exceeds that which can be input to the inverter. This can be indicative of improper configuration of the plant. That KPI is computed on the signal $x'_k$ corresponding to 80% of the recording in the middle of the day. The first and the last 10% of measurement is not considered as it is a time of lower production during sunrise and sunset. In the next step, the histogram $h$ is calculated using that data appended of a single zero value. That zero is added to assure unchanged lowest value for each case.

The histogram preferably divides data into 200 bins, however the person skilled in the art will know that other number of bins may be used. The histogram $h$, in the preferred embodiment, always has number of measured samples in each bin that is in the range from 1 to 200 denoted as h[1: 200].

Then the KPI describing the limiting phenomenon is preferably given as:

$$KPI_k[4] = \frac{10 \cdot h[200]^2}{\sum_{i=191}^{200} h[i]}$$

To calculate the next KPI the difference and approximate derivative of measured and estimated signals are needed. Those are denoted respectively as $dx_k$ and $d\hat{x}_k$. By subtracting the standard deviation of modeled and measured values of their daily differences the daily jitter is obtained. Daily jitter can indicate rapid fluctuations in the difference between the power expected and that which is achieved and can indicate various developing problems. The feature is preferably computed in the following manner:

$$KPI_k[5] = \sqrt{\frac{\sum_{i=1}^{N}\left(dx_{k_i} - \overline{dx_k}\right)^2}{N-1}} - \sqrt{\frac{\sum_{i=1}^{N}\left(d\hat{x}_{k_i} - \overline{d\hat{x}_k}\right)^2}{N-1}}$$

The next feature describes the difference from modeled values. It is preferably obtained by computing the mean value of absolute differences of measured and modeled values according to the following definition:

$$KPI_k[6] = \frac{1}{n}\sum_{i=1}^{n}\left|x_{k_i} - \hat{x}_{k_i}\right|$$

The next feature is designed to describe power shape asymmetry between morning and evening in relation to the estimated power. This indicator can highlight issues related to shading. To compute the KPI, the signals are divided into morning $x_{km}$ and evening $x_{ke}$ part, where their indexes correspond to $\tau_k < 0.5$ and $\tau_k > 0.5$ respectively.

The estimated signal is threated alike to separate its morning $\hat{x}_{km}$ and evening $\hat{x}_{ke}$ parts. To minimalize the influence of outliers in the values to be compared the lowest 5% of the values and the highest 5% are rejected from final computation. Using the central 90% of the values in $x_{km}$, $x_{ke}$, $\hat{x}_{km}$, and $\hat{x}_{ke}$ the median shape asymmetry is preferably computed as follows:

$$KPI_k[7] = \frac{1}{n}\sum_{i=1}^{n}\left|x_{ke_i} - \hat{x}_{ke_i}\right| - \frac{1}{n}\sum_{i=1}^{n}\left|x_{km_i} - \hat{x}_{km_i}\right|$$

To compute the next feature the estimated signal is used to find its timestamps that fulfil the following criteria: $\hat{\tau}_k[1]$ - first value greater than the threshold T; $\hat{\tau}_k[2]$ - is after the $\hat{\tau}_k[1]$ and signal's value stops increasing; $\hat{\tau}_k[3]$ - signal value starts decreasing; $\hat{\tau}_k[4]$ - last value of the signal greater than the threshold T. The threshold T is defined to be equal to 0.1. Finally, the obtained ranges of data are used to evaluate difference between measured and estimated signals using approximated integral.

Morning residual from modeled:

$$KPI_k[8] = \frac{\hat{\tau}_k[2] - \hat{\tau}_k[1]}{2N}\sum_{n=1}^{N}(x_k[n] - \hat{x}_k[n]) + (x_k[n+1] - \hat{x}_k[n+1])$$

Evening residual from modeled:

$$KPI_k[9] = \frac{\hat{\tau}_k[4] - \hat{\tau}_k[3]}{2N}\sum_{n=1}^{N}(x_k[n] - \hat{x}_k[n]) + (x_k[n+1] - \hat{x}_k[n+1])$$

The next feature is designed to pinpoint days with zero power production. In other words, during these days the power production is equal to zero. To do so, the number of measured samples $n_k$ is used together with the amount of non-zero values $m_k$ in the measured power $x_k$. The indicator is preferably defined as follows:

$$KPI_k[10] = \frac{n_k - m_k}{n_k}$$

Not only the signals with no power generation informs about possible faults, but also the signals with reduced power generation. Therefore, another indicator is proposed.

To calculate it the normalization of the measured signal according to the estimated one is performed. In case of the perfect match of both signals the normalized values are equal to zero. It is calculated using the following formula:

$$\breve{x}_k = \frac{x_k - \hat{x}_k}{\hat{x}_k}$$

Moreover, all the normalized power $\breve{x}_k$ values lower than 2% of the nominal power are replaced by zeros to avoid later computational misrepresentation while dividing some value by the normalized power $\breve{x}_k$.

Similarly as in the case of the limiting only the middle part of the signal is considered. Then the standard deviation $\sigma_k$ of the normalized power $\breve{x}_k$ during k$^{th}$ day is computed according to formula:

$$\sigma_k = \sqrt{\frac{\sum_{i=1}^{N}\left(\breve{x}_{k_i} - \overline{\breve{x}_k}\right)^2}{N-1}}$$

The standard deviation $\sigma_k$ value is used to calculate the feature describing the reduced power production preferably in the following manner:

$$KPI_k[11] = \begin{cases} \dfrac{\overline{\breve{x}_k}}{0,1}, & \sigma_k < 0,1 \\ \dfrac{\overline{\breve{x}_k}}{\sigma_k}, & \sigma_k \geq 0,1 \end{cases}$$

In the consecutive step, the KPIs described in the previous section are used for identification of malfunction types. The thresholds are defined empirically and are easy to adjust for the users' needs, preferably all KPIs have the same threshold, even more preferably this threshold is equal to 1. The links between KPIs exceeding the thresholds and fault types are listed in the table below.

| Fault Type | Significant KPI |
|---|---|
| Zero Production | $KPI_k[10]$- zero power production |
| Reduced Production | $KPI_k[11]$- reduced power production |
| Limiting | $KPI_k[4]$- limiting |
| Fluctuation | $KPI_k[5]$- daily jitter |
| Asymmetry | $KPI_k[7]$- *shape* asymmetry |
| Unusual Power Shape | $KPI_k[6]$- difference from modeled |
| Start-up / Shut-Down Anomaly | $KPI_k[1]$- sunrise difference from modeled<br>$KPI_k[2]$- sunset difference from modeled<br>$KPI_k[3]$- *day* length difference from modeled<br>$KPI_k[8]$- morning residual from modeled<br>$KPI_k[9]$- evening residual from modeled |

In next step an action is taken on a basis of the calculated KPIs and whether any one of the KPIs have exceeded the predefined threshold. Examples of such actions are plotting at least one KPI as a function of time and indicating if the KPI value is exceeding a predefined threshold, setting an alarm, turning on an additional power source to compensate lower power generated by the photovoltaic installation. Actions mentioned hereinbefore are merely an example and any action which benefits from such information may be perform after calculations.

In the preferred embodiment at least one KPI is calculated for each full day separately. This KPI is calculated after signal from full day have been obtained. In other preferred embodiment at least one KPI is calculated on a basis of signal recorded in time series. This KPI may be calculated in a real time or, for example, once every one hour.

Preferably at least one KPI is visualized and displayed or printed.

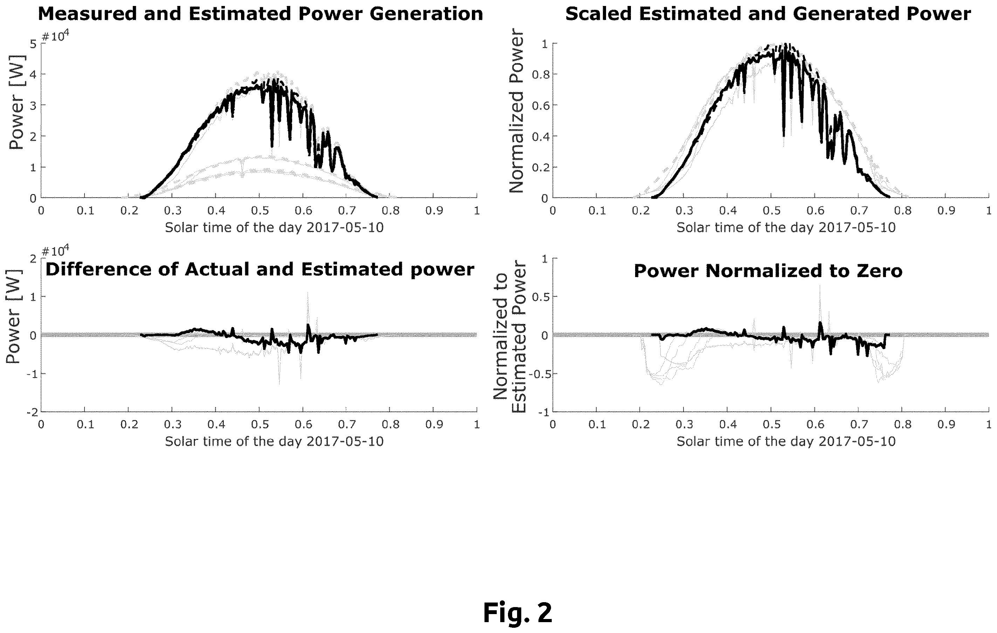

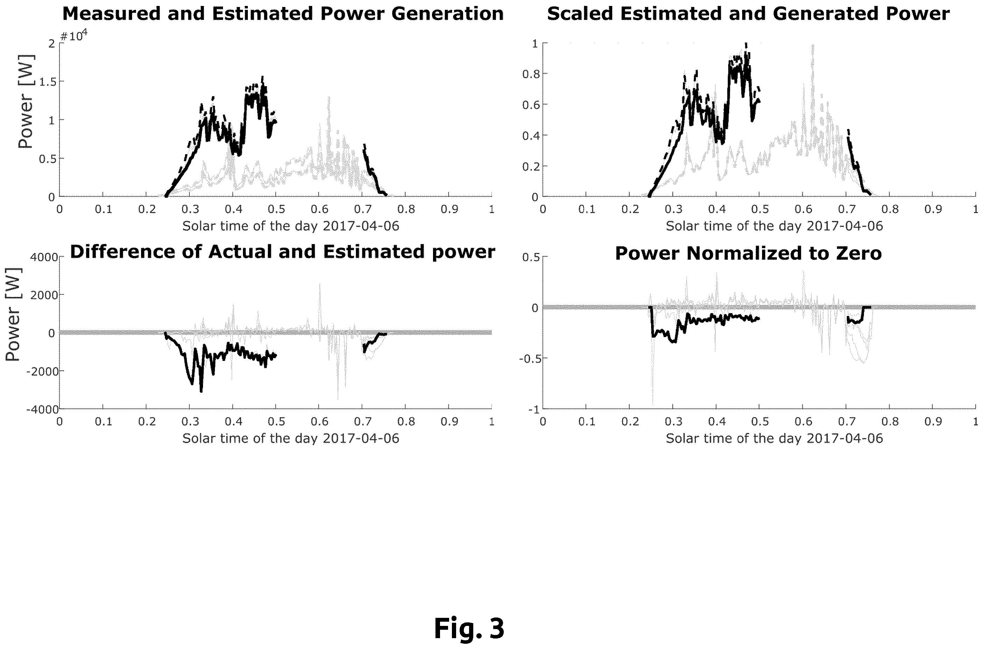

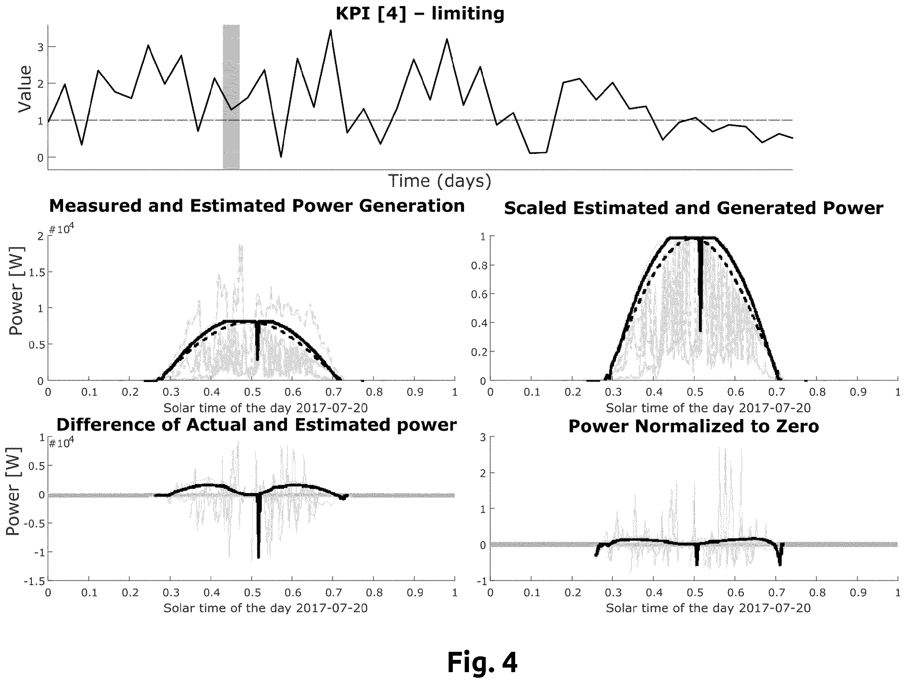

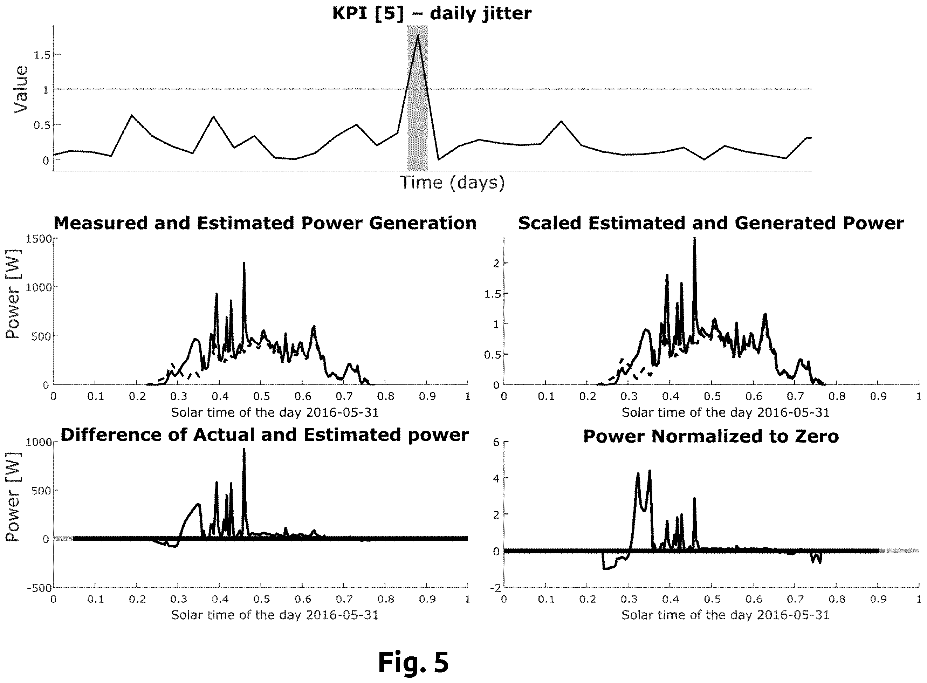

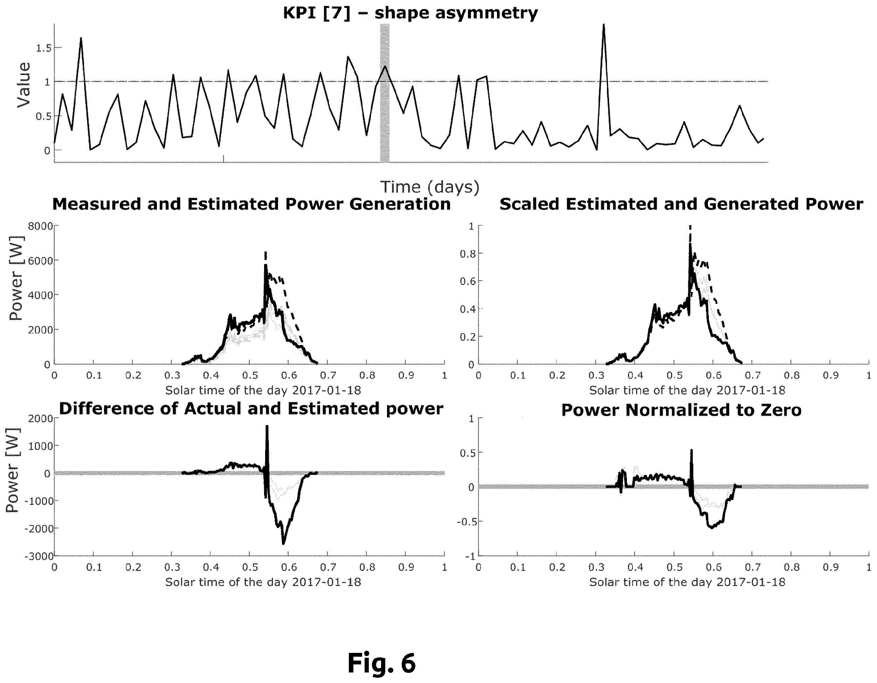

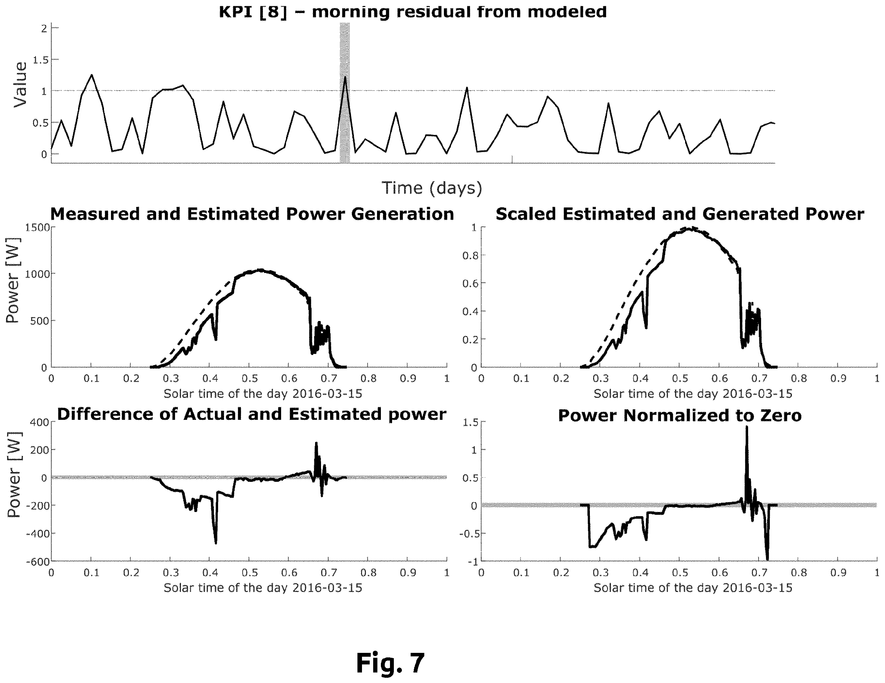

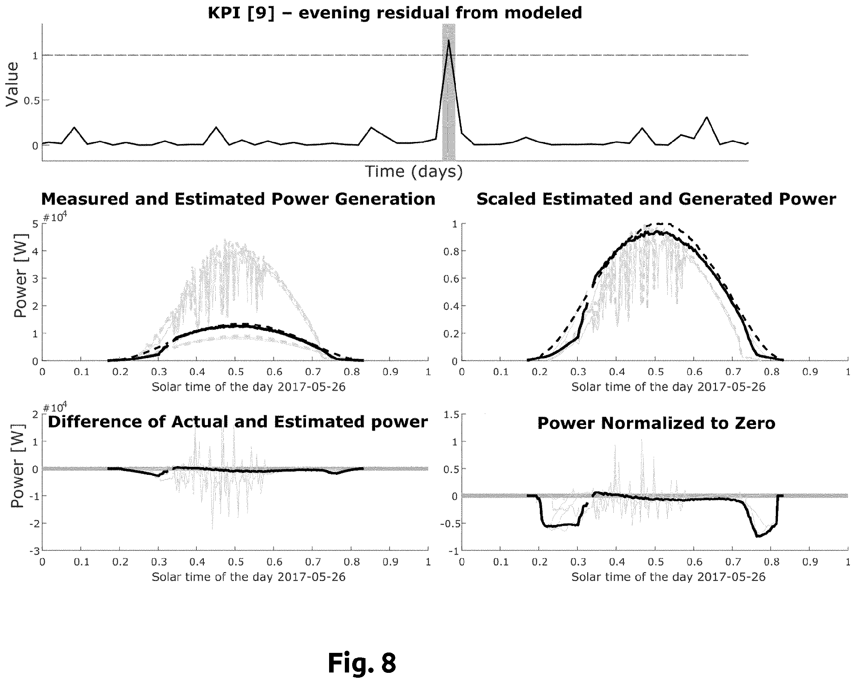

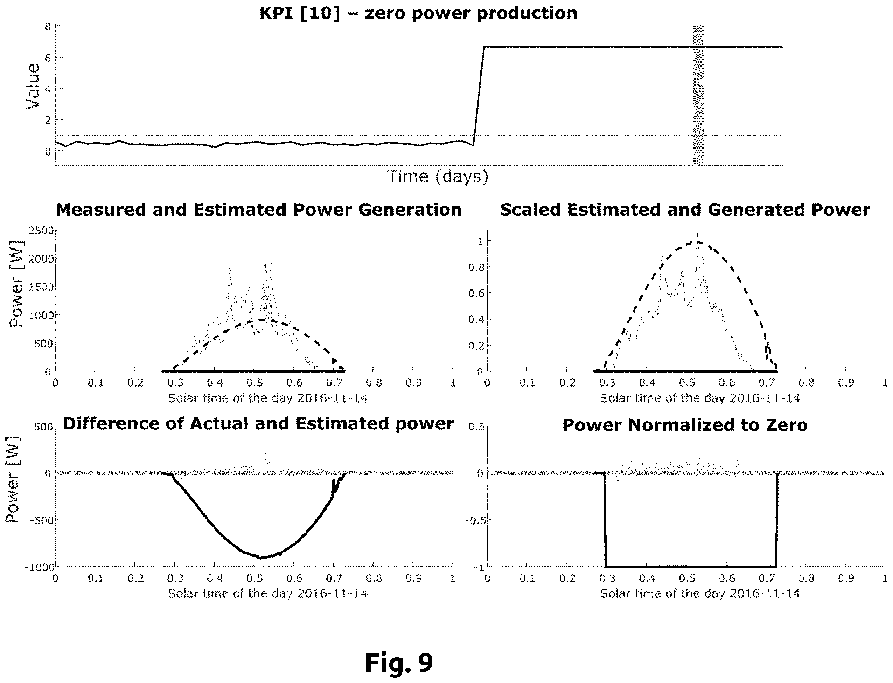

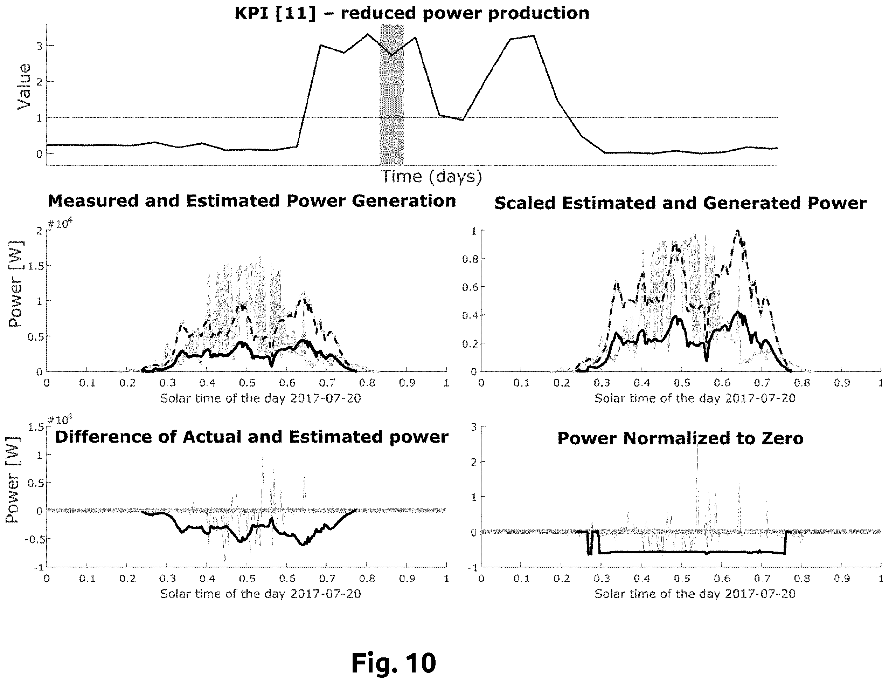

Figures 2-10 present visualized power related data. Fig. 2 presents typical data, where no problem has been detected. Fig. 3 presents data with data quality problem, wherein data for time periods is missing. On fig. 4 power limiting (KPI[4]) is detected. On fig. 5 daily jitter (KPI[5]) is detected. On fig. 6 asymmetry (KPI[7]) is detected. On fig. 7 morning residual from modeled is detected (KPI[8]), wherein on fig. 8 evening residual from modeled is detected (KPI[9]). On fig. 9 zero power production is detected (KPI[10]). On fig. 10 reduced power production is detected (KPI[11]).

On figures 4-10 The top plot presents the evolution of computed KPIs for the inspected period. Four plots below, also on figures 2-3, present respectively measured and estimated (dashed line) power generation, their scaled values, difference of measured and estimated power, and normalized power. Note that the normalization approaches (use of solar time, scaling to model) allows all inverters considered to be compared with one another, regardless of location (inverters in The Netherlands, India, USA, Palestine, and Canada are considered) and size of inverter (here ABB TRIOs and UNOs with different nominal powers may be compared). Such information is useful when evaluating the performance of inverters across a fleet / portfolio.

**Claims**

1. A method of detecting and identifying a malfunction of a photovoltaic installation, comprising a single photovoltaic panel or a set of connected photovoltaic panels, said method comprising steps of

   - measuring (1) a generated power value of the photovoltaic installation,
   - obtaining (2) an estimated power of the photovoltaic installation,
   **characterized in that** it further comprises the steps of:

      - obtaining (3) a solar time of a location of the photovoltaic installation,
      - extracting (5) a sunrise and a sunset of a location of the photovoltaic installation for each day,
      - computing (7) one or more Key Performance Indicator(s), KPIs, based on the generated power value of the photovoltaic installation and the estimated power of the photovoltaic installation,
      - identifying (8) if any of the computed KPIs is exceeding a predefined threshold, and
      - taking action (9) based on at least one of the computed KPIs exceeding the threshold value or none of the KPIs exceeding the threshold value, the step of taking action (9) based on at least one of the computed KPIs comprising at least one of the following actions:

         - plotting at least one KPI as a function of time and indicating if the KPI value is exceeding a predefined threshold,
         - setting an alarm,
         - diagnosing root cause of the system underperformance,
         - planning maintenance actions, and/or
         - turning on an additional power source to compensate lower power generated by the photovoltaic installation,

   wherein the method further comprises a step of normalizing (6) the generated power value of the photovoltaic installation and wherein at least one of the computed KPIs defines a reduced power production, and/or
   wherein at least one of the computed KPIs defines the difference between predicted and measured time of the sunrise, and/or
   wherein at least one of the computed KPIs defines the difference between predicted and measured time of the sunset, and/or
   wherein at least one of the computed KPIs defines a day length difference, which is a difference between a predicted day length and a measured day length, and/or
   wherein at least one histogram-based KPI is used to detect limitation of the generated power value of the photovoltaic installation, wherein a histogram of signal $x'_k$ corresponding to the generated power value during the $k^{th}$ day is calculated, and/or
   wherein at least one of the computed KPIs is used to detect a daily jitter, and/or
   wherein at least one of the computed KPIs is used to detect the difference between generated and estimated power value of the photovoltaic installation, and/or
   wherein at least one of the computed KPIs is used to detect a power shape asymmetry between morning and evening in relation to estimated power value of the photovoltaic installation, and/or
   wherein at least one of the computed KPIs determines the difference between the generated power value of the photovoltaic installation and the estimated power of the photovoltaic installation during morning, and/or
   wherein at least one of the computed KPIs determines the difference between the generated power value of the photovoltaic installation and the estimated power of the photovoltaic installation during evening, and/or
   wherein at least one of the computed KPIs is used to detect days with zero power production.

2. The method according to claim 1, wherein the step of normalizing (6) the generated power value of the photovoltaic installation is calculated with a formula

$$\widetilde{\overline{x_k}} = \frac{x_k - \hat{x}_k}{\hat{x}_k}$$

wherein $x_k$ is a single data related to the generated power value of the photovoltaic installation on the $k^{th}$ day, and $\hat{x}_k$ is a single data related to the estimated power value of the photovoltaic installation on the $k^{th}$ day, preferably $\widetilde{\overline{x_k}}$ with values lower than 2% of the generated power values are replaced by zeros.

3. The method according to claim 2, wherein the at least one of the computed KPIs defining the reduced power production is calculated with a formula

$$KPI_k[11] = \begin{cases} \dfrac{\overline{\overline{x}}_k}{0{,}1}, & \sigma_k < 0{,}1 \\[2mm] \dfrac{\overline{\overline{x}}_k}{\sigma_k}, & \sigma_k \geq 0{,}1 \end{cases}$$

Wherein standard deviation $\sigma_k$ of the normalized power is calculated with a formula

$$\sigma_k = \sqrt{\frac{\sum_{i=1}^{N}\left(\breve{x}_{k_i} - \overline{\breve{x}}_k\right)^2}{N-1}}$$

4. The method according to any one of claims 1-3, wherein the at least one of the computed KPIs defining the difference between predicted and measured time of the sunrise is calculated with a formula

$$KPI_k[1] = \hat{\tau}_k[r] - \tau_k[r]$$

wherein $\hat{\tau}_k[r]$ is the predicted time of the sunrise and $\tau_k[r]$ is the measured time of the sunrise, and even more preferably the predicted time of the sunrise is calculated with a Clear Sky Model and the measured time of the sunrise is calculated with a formula

$$\tau_k[r] = \tau_k[n] + (\tau_k[n+1] - \tau_k[n])\frac{T_k - x_k[n]}{x_k[n+1] - x_k[n]}$$

wherein $\tau_k[r]$ is time of the sunrise on the $k^{th}$ day, $\tau_k[n]$ and $\tau_k[n+1]$ constitute such a pair that $\tau_k[n]$ is a time of a measurement during the $k^{th}$ day with generated power value lower than $T_k$ and $\tau_k[n+1]$ is a time of a subsequent measurement with the generated power value greater than $T_k$, and $T_k$ is equal to $0{,}1 \cdot p90_k$, wherein $p90_k$ is a $90^{th}$ percentile computed on the generated power value and $x_k[n]$ is a single $n^{th}$ data related to the generated power value of the photovoltaic installation on the $k^{th}$ day, wherein preferably a 24 hour day is converter into a day time which has value from 0 to 1, wherein a value of 0,5 means time of a solar noon.

5. The method according to any one of claims 1-4, wherein the at least one of the computed KPIs defining the difference between the predicted and measured time of the sunset is calculated with a formula

$$KPI_k[2] = \hat{\tau}_k[s] - \tau_k[s]$$

wherein $\hat{\tau}_k[s]$ is the predicted time of the sunset and $\tau_k[s]$ is the measured time of the sunset, and even more preferably the predicted time of the sunset is calculated with a Clear Sky Model and the measured time of the sunset is calculated with a formula

$$\tau_k[s] = \tau_k[n] + (\tau_k[n+1] - \tau_k[n])\frac{T_k - x_k[n]}{x_k[n+1] - x_k[n]}$$

wherein $\tau_k[s]$ is time of the sunset on the kth day, $\tau_k[n]$ and $\tau_k[n+1]$ constitute such a pair that $\tau_k[n]$ is a time of a measurement during the kth day with generated power value greater than $T_k$ and $\tau_k[n+1]$ is a time of a subsequent measurement with the generated power value lower than $T_k$, and $T_k$ is equal to $0,1 \cdot p90_k$ and , wherein $p90_k$ is a 90th percentile computed on the generated power value and $x_k[n]$ is a single nth data related to the generated power value of the photovoltaic installation on the kth day, wherein preferably a 24 hour day is converter into a day time which has value from 0 to 1, wherein a value of 0,5 means time of a solar noon.

6. The method according to any one of claims 1-5, wherein the at least one of the computed KPIs defining the day length difference is calculated with a formula

$$KPI_k[3] = (\hat{\tau}_k[s] - \hat{\tau}_k[r]) - (\tau_k[s] - \tau_k[r])$$

wherein the $\hat{\tau}_k[s]$ is predicted time of the sunset, $\hat{\tau}_k[r]$ is a predicted time of a sunrise, $\tau_k[s]$ is time of the sunset on the kth day, and $\tau_k[r]$ is time of the sunrise on the kth day, wherein preferably a 24 hour day is converter into a day time which has value from 0 to 1, wherein a value of 0,5 means time of a solar noon.

7. The method according to any one of claims 1-6, wherein the at least one histogram-based KPI used to detect the limitation of the generated power value of the photovoltaic installation, wherein the histogram of signal $x'_k$ corresponding to the generated power value during the kth day is calculated, preferably without first 10% and last 10% of data corresponding to the generated power value of the photovoltaic installation in a time soon after the sunrise or before the sunset and even more preferably a single zero value is added to the signal $x'_k$, wherein histogram preferably divides data into 200 bins, is calculated with a formula

$$KPI_k[4] = \frac{10 \cdot h[200]^2}{\sum_{i=191}^{200} h[i]}$$

wherein h[i] is an ith element of the histogram.

8. The method according to any one of claims 1-7, wherein the at least one of the computed KPIs used to detect the daily jitter is calculated with a formula

$$KPI_k[5] = \sqrt{\frac{\sum_{i=1}^{N}\left(dx_{k_i} - \overline{dx_k}\right)^2}{N-1}} - \sqrt{\frac{\sum_{i=1}^{N}\left(d\hat{x}_{k_i} - \overline{d\hat{x}_k}\right)^2}{N-1}}$$

wherein $dx_k$ is a single data related to an approximate derivative of the generated power value of the photovoltaic installation on the kth day, and $d\hat{x}_k$ is a single data related to an approximate derivative of the estimated power value of the photovoltaic installation on the kth day.

9. The method according to any one of claims 1-8, wherein the at least one of the computed KPIs used to detect the difference between generated and estimated power value of the photovoltaic installation is calculated with a formula

$$KPI_k[6] = \frac{1}{n}\sum_{i=1}^{n}\left|x_{k_i} - \hat{x}_{k_i}\right|$$

wherein $x_k$ is a single data related to the generated power value of the photovoltaic installation on the kth day, and $\hat{x}_k$ is a single data related to the estimated power value of the photovoltaic installation on the kth day.

10. The method according to any one of claims 1-9, wherein the at least one of the computed KPIs used to detect the power shape asymmetry between morning and evening in relation to estimated power value of the photovoltaic installation is calculated with a formula

$$KPI_k[7] = \frac{1}{n}\sum_{i=1}^{n}\left|x_{ke_i} - \hat{x}_{ke_i}\right| - \frac{1}{n}\sum_{i=1}^{n}\left|x_{km_i} - \hat{x}_{km_i}\right|$$

wherein $x_{ke_i}$ is a single $i^{th}$ data related to the generated power value of the photovoltaic installation after solar noon on the $k^{th}$ day, $\hat{x}_{ke_i}$ is a single $i^{th}$ data related to the estimated power value of the photovoltaic installation after solar noon on the $k^{th}$ day, $x_{km_i}$ is a single $i^{th}$ data related to the generated power value of the photovoltaic installation before solar noon on the $k^{th}$ day, and $\hat{x}_{km_i}$ is a single $i^{th}$ data related to the estimated power value of the photovoltaic installation before solar noon on the $k^{th}$ day, preferably the lowest 5% of power values and the highest 5% of power values are not used during calculation of this KPI.

11. The method according to any one of claims 1-10, wherein the at least one of the computed KPIs determining the difference between the generated power value of the photovoltaic installation and the estimated power of the photovoltaic installation during morning is calculated with a formula

$$KPI_k[8] = \frac{\hat{\tau}_k[2] - \hat{\tau}_k[1]}{2N}\sum_{n=1}^{N}(x_k[n] - \hat{x}_k[n]) + (x_k[n+1] - \hat{x}_k[n+1])$$

wherein $\hat{\tau}_k[1]$ is a time of a first estimated power value greater than the threshold T and $\hat{\tau}_k[2]$ is a time when the estimated power value stops increasing, $x_k[n]$ is a single $n^{th}$ data related to the generated power value of the photovoltaic installation on the $k^{th}$ day and $\hat{x}_k[n]$ is a single $n^{th}$ data related to the estimated power value of the photovoltaic installation on the $k^{th}$ day, wherein preferably a 24 hour day is converter into a day time which has value from 0 to 1, wherein a value of 0,5 means time of a solar noon.

12. The method according to any one of claims 1-11, wherein the at least one of the computed KPIs determining the difference between the generated power value of the photovoltaic installation and the estimated power of the photovoltaic installation during evening is calculated with a formula

$$KPI_k[9] = \frac{\hat{\tau}_k[4] - \hat{\tau}_k[3]}{2N}\sum_{n=1}^{N}(x_k[n] - \hat{x}_k[n]) + (x_k[n+1] - \hat{x}_k[n+1])$$

wherein $\hat{\tau}_k[3]$ is a time of a first estimated power value which starts to decreasing and $\hat{\tau}_k[4]$ is a time of a last estimated power value greater than the threshold T, $x_k[n]$ is a single $n^{th}$ data related to the generated power value of the photovoltaic installation on the $k^{th}$ day and $\hat{x}_k[n]$ is a single $n^{th}$ data related to the estimated power value of the photovoltaic installation on the $k^{th}$ day, wherein preferably a 24 hour day is converter into a day time which has value from 0 to 1, wherein a value of 0,5 means time of a solar noon.

13. The method according to any one of claims 1-12, wherein the at least one of the computed KPIs used to detect days with zero power production is calculated with a formula

$$KPI_k[10] = \frac{n_k - m_k}{n_k}$$

wherein $n_k$ is a number of measured samples of the generated power value of the photovoltaic installation and $m_k$ is a number of non-zero values of measured samples of the generated power value of the photovoltaic installation.

14. The method according to any one of claims 1-13, **characterized in that** all KPIs have the same threshold value, preferably the threshold value is 1.

15. The method according to any one of claims 1-14, **characterized in that** the method further comprises a step of splitting (4) the generated power value of the photovoltaic installation by days.

16. The method according to any one of claims 1-15, **characterized in that** the one or more KPIs are calculated for each full day separately, wherein selected KPIs are computed on time series data and subsequently the selected KPIs are compared with threshold values to detect days when the inverter does not work as expected.

17. The method according to any one of claims 1-16, **characterized in that** one or more from the following malfunctions are detected: Zero Production, Reduced Production, Limiting, Fluctuation, Asymmetry, Unusual Power, Shape, Start-Up Anomaly, Shut-Down Anomaly.

18. The method according to any one of claims 1-17, **characterized in that** one or more KPIs are visualized and then displayed or printed.

**Patentansprüche**

1. Verfahren zum Erkennen und Identifizieren einer Störung einer Photovoltaikanlage, die ein einzelnes Photovoltaikmodul oder einen Satz verbundener Photovoltaikmodule umfasst, wobei das Verfahren folgende Schritte umfasst

- Messen (1) eines Werts der erzeugten Leistung der Photovoltaikanlage,
- Erlangen (2) einer geschätzten Leistung der Photovoltaikanlage,
**dadurch gekennzeichnet, dass** es ferner die folgenden Schritte umfasst:

- Erlangen (3) einer Sonnenzeit für einen Standort der Photovoltaikanlage,
- Extrahieren (5) eines Sonnenaufgangs und eines Sonnenuntergangs an einem Standort der Photovoltaikanlage für jeden Tag,
- Berechnen (7) eines oder mehrerer wichtiger Leistungsindikatoren (Key Performance Indicator(s)), KPIs, auf der Grundlage des Werts der erzeugten Leistung der Photovoltaikanlage und der geschätzten Leistung der Photovoltaikanlage,
- Identifizieren (8), ob einer der berechneten KPIs einen vordefinierten Schwellenwert überschreitet, und
- Ergreifen von Maßnahmen (9) basierend darauf, dass mindestens einer der berechneten KPIs den Schwellenwert überschreitet oder keiner der KPIs den Schwellenwert überschreitet, wobei der Schritt des Ergreifens von Maßnahmen (9) basierend auf mindestens einem der berechneten KPIs mindestens eine der folgenden Maßnahmen umfasst:
- grafisches Darstellen mindestens eines KPI als Funktion der Zeit und Angeben, ob der KPI-Wert einen vordefinierten Schwellenwert überschreitet,
- Einstellen eines Alarms,
- Diagnostizieren der Ursache für die unzureichende Leistung des Systems,
- Planen von Wartungsmaßnahmen, und/oder
- Einschalten einer zusätzlichen Leistungsquelle, um die geringere von der Photovoltaikanlage erzeugte Leistung auszugleichen,

wobei das Verfahren ferner einen Schritt des Normalisierens (6) des Werts der erzeugten Leistung der Photovoltaikanlage umfasst und wobei mindestens einer der berechneten KPIs eine reduzierte Leistungserzeugung definiert, und/oder
wobei mindestens einer der berechneten KPIs die Differenz zwischen dem vorhergesagten und dem gemessenen Zeitpunkt des Sonnenaufgangs definiert, und/oder
wobei mindestens einer der berechneten KPIs die Differenz zwischen dem vorhergesagten und dem gemessenen Zeitpunkt des Sonnenuntergangs definiert, und/oder
wobei mindestens einer der berechneten KPIs eine Tageslängendifferenz definiert, die eine Differenz zwischen einer vorhergesagten Tageslänge und einer gemessenen Tageslänge ist, und/oder
wobei mindestens ein histogrammbasierter KPI verwendet wird, um eine Begrenzung des Werts der erzeugten Leistung der Photovoltaikanlage zu erkennen, wobei ein Histogramm des Signals $x'_k$, das dem Wert der erzeugten Leistung während des k-ten Tages entspricht, berechnet wird, und/oder
wobei mindestens einer der berechneten KPIs verwendet wird, um einen täglichen Jitter zu erkennen, und/oder
wobei mindestens einer der berechneten KPIs verwendet wird, um die Differenz zwischen dem Wert der erzeugten Leistung und dem Wert der geschätzten Leistung der Photovoltaikanlage zu erkennen, und/oder
wobei mindestens einer der berechneten KPIs verwendet wird, um eine Asymmetrie der Leistungsform zwischen Morgen und Abend in Bezug auf den Wert der geschätzten Leistung der Photovoltaikanlage zu erkennen, und/oder
wobei mindestens einer der berechneten KPIs die Differenz zwischen dem Wert der erzeugten Leistung der Photovoltaikanlage und der geschätzten Leistung der Photovoltaikanlage am Morgen bestimmt, und/oder wobei mindestens einer der berechneten KPIs die Differenz zwischen dem Wert der erzeugten Leistung der Photovoltaikanlage und der geschätzten Leistung der Photovoltaikanlage am Abend bestimmt, und/oder wobei mindestens einer der berechneten KPIs verwendet wird, um Tage mit keinerlei Leistungserzeugung zu erkennen.

2. Verfahren nach Anspruch 1, wobei der Schritt des Normalisierens (6) des Werts der erzeugten Leistung der Photovoltaikanlage mit der folgenden Formel berechnet wird

$$\widetilde{x_k} = \frac{x_k - \hat{x}_k}{\hat{x}_k}$$

wobei $x_k$ ein einzelner Datenwert ist, der sich auf den Wert der erzeugten Leistung der Photovoltaikanlage am k-ten Tag bezieht, und $\hat{x}_k$ ein einzelner Datenwert ist, der sich auf den Wert der geschätzten Leistung der Photovoltaikanlage am k-ten Tag bezieht, wobei vorzugsweise $\widetilde{x_k}$ mit Werten unter 2% der Werte der erzeugten Leistung durch Nullen ersetzt werden.

3. Verfahren nach Anspruch 2, wobei der mindestens eine der berechneten KPIs, der die reduzierte Leistungserzeugung definiert, mit der folgenden Formel berechnet wird

$$KPI_k[11] = \begin{cases} \dfrac{\overline{\widetilde{x}_k}}{0,1}, \sigma_k < 0,1 \\ \dfrac{\overline{\widetilde{x}_k}}{\sigma_k}, \sigma_k \geq 0,1 \end{cases}$$

wobei die Standardabweichung $\sigma_k$ der normalisierten Leistung mit der folgenden Formel berechnet wird

$$\sigma_k = \sqrt{\frac{\sum_{i=1}^{N}\left(\check{x}_{k_i} - \overline{\widetilde{x}_k}\right)^2}{N-1}}$$

4. Verfahren nach einem der Ansprüche 1 bis 3, wobei der mindestens eine der berechneten KPIs, der die Differenz zwischen dem vorhergesagten und dem gemessenen Zeitpunkt des Sonnenaufgangs definiert, mit der folgenden Formel berechnet wird

$$KPI_k[1] = \hat{\tau}_k[r] - \tau_k[r]$$

wobei $\hat{\tau}_k[r]$ der vorhergesagte Zeitpunkt des Sonnenaufgangs ist und $\tau_k[r]$ der gemessene Zeitpunkt des Sonnenaufgangs ist, und noch mehr bevorzugt wird der vorhergesagte Zeitpunkt des Sonnenaufgangs mit einem Modell für klaren Himmel (Clear Sky Model) berechnet und der gemessene Zeitpunkt des Sonnenaufgangs mit der folgenden Formel berechnet

$$\tau_k[r] = \tau_k[n] + (\tau_k[n+1] - \tau_k[n])\frac{T_k - x_k[n]}{x_k[n+1] - x_k[n]}$$

wobei $\tau_k[r]$ der Zeitpunkt des Sonnenaufgangs am k-ten Tag ist, $\tau_k[n]$ und $\tau_k[n+1]$ ein solches Paar bilden, dass $\tau_k[n]$ ein Zeitpunkt einer Messung während des k-ten Tages mit einem Wert der erzeugten Leistung kleiner als $T_k$ ist und $\tau_k[n+1]$ ein Zeitpunkt einer nachfolgenden Messung mit einem Wert der erzeugten Leistung größer als $T_k$ ist, und $T_k$ gleich $0,1 \cdot \rho 90_k$ ist, wobei $p90_k$ ein neunzigstes Perzentil ist, das für den Wert der erzeugten Leistung berechnet wird, und $x_k[n]$ ein einzelner n-ter Datenwert ist, der sich auf den Wert der erzeugten Leistung der Photovoltaikanlage am k-ten Tag bezieht, wobei vorzugsweise ein 24-Stunden-Tag in eine Tageszeit umgewandelt wird, die einen Wert von 0 bis 1 hat, wobei ein Wert von 0,5 den Zeitpunkt eines Sonnenhöchststands bedeutet.

5. Verfahren nach einem der Ansprüche 1 bis 4, wobei der mindestens eine der berechneten KPIs, der die Differenz zwischen dem vorhergesagten und dem gemessenen Zeitpunkt des Sonnenuntergangs definiert, mit der folgenden Formel berechnet wird

$$KPI_k[2] = \hat{\tau}_k[s] - \tau_k[s]$$

wobei $\hat{\tau}_k[s]$ der vorhergesagte Zeitpunkt des Sonnenuntergangs ist und $\tau_k[s]$ der gemessene Zeitpunkt des Sonnenuntergangs, und noch mehr bevorzugt wird der vorhergesagte Zeitpunkt des Sonnenuntergangs mit einem Modell für klaren Himmel (Clear Sky Model) berechnet und der gemessene Zeitpunkt des Sonnenuntergangs wird mit der folgenden Formel berechnet

$$\tau_k[s] = \tau_k[n] + (\tau_k[n+1] - \tau_k[n]) \frac{T_k - x_k[n]}{x_k[n+1] - x_k[n]}$$

wobei $\tau_k[s]$ der Zeitpunkt des Sonnenuntergans am k-ten Tag ist, $\tau_k[n]$ und $\tau_k[n+1]$ ein solches Paar bilden, dass $\tau_k[n]$ ein Zeitpunkt einer Messung während des k-ten Tages mit einem Wert der erzeugten Leistung größer als $T_k$ ist und $\tau_k[n+1]$ ein Zeitpunkt einer nachfolgenden Messung mit einem Wert der erzeugten Leistung kleiner als $T_k$ ist, und $T_k$ gleich $0,1 \cdot p90_k$ ist, wobei $p90_k$ ein neunzigstes Perzentil ist, das für den Wert der erzeugten Leistung berechnet wird, und $x_k[n]$ ein einzelner n-ter Datenwert ist, der sich auf den Wert der erzeugten Leistung der Photovoltaikanlage am k-ten Tag bezieht, wobei vorzugsweise ein 24-Stunden-Tag in eine Tageszeit umgewandelt wird, die einen Wert von 0 bis 1 hat, wobei ein Wert von 0,5 den Zeitpunkt eines Sonnenhöchststands bedeutet.

6. Verfahren nach einem der Ansprüche 1 bis 5, wobei der mindestens eine der berechneten KPIs, der die Tageslängendifferenz definiert, mit der folgenden Formel berechnet wird

$$KPI_k[3] = (\hat{\tau}_k[s] - \hat{\tau}_k[r]) - (\tau_k[s] - \tau_k[r])$$

wobei $\hat{\tau}_k[s]$ der vorhergesagte Zeitpunkt des Sonnenuntergangs ist, $\hat{\tau}_k[r]$ ein vorhergesagter Zeitpunkt eines Sonnenaufgangs ist, ein vorhergesagter Zeitpunkt eines Sonnenaufgangs ist, $\tau_k[s]$ der Zeitpunkt des Sonnenuntergangs am k-ten Tag ist und $\tau_k[r]$ der Zeitpunkt des Sonnenaufgangs am k-ten Tag ist, wobei vorzugsweise ein 24-Stunden-Tag in eine Tageszeit umgewandelt wird, die einen Wert von 0 bis 1 hat, wobei ein Wert von 0,5 den Zeitpunkt eines Sonnenhöchststands bedeutet.

7. Verfahren nach einem der Ansprüche 1 bis 6, wobei der mindestens eine histogrammbasierte KPI, der verwendet wird, um die Begrenzung des Werts der erzeugten Leistung der Photovoltaikanlage zu erkennen, wobei das Histogramm des Signals x'$_k$, das dem Wert der erzeugten Leistung während des k-ten Tages entspricht, vorzugsweise ohne die ersten 10% und die letzten 10% der Daten, die dem Wert der erzeugten Leistung der Photovoltaikanlage in einer Zeit kurz nach dem Sonnenaufgang oder vor dem Sonnenuntergang entsprechen, berechnet wird und noch bevorzugter dem Signal x'$_k$ ein einzelner Nullwert hinzugefügt wird, wobei das Histogramm vorzugsweise die Daten in 200 Bins unterteilt, mit einer Formel berechnet wird

$$KPI_k[4] = \frac{10 \cdot h[200]^2}{\sum_{i-191}^{200} h[i]}$$

wobei h[i] ein i-tes Element des Histogramms ist.

8. Verfahren nach einem der Ansprüche 1 bis 7, wobei der der mindestens eine der berechneten KPIs, der verwendet wird, um den täglichen Jitter zu erkennen, mit der folgenden Formel berechnet wird

$$KPI_k[5] = \sqrt{\frac{\sum_{i=1}^{N}\left(dx_{k_i} - \overline{dx_k}\right)^2}{N-1}} - \sqrt{\frac{\sum_{i=1}^{N}\left(d\check{x}_{k_i} - \overline{d\check{x}_k}\right)^2}{N-1}}$$

wobei $dx_k$ ein einzelner Datenwert ist, der sich auf eine ungefähre Ableitung des Werts der erzeugten Leistung der Photovoltaikanlage am k-ten Tag bezieht, und $d\check{x}_k$ ein einzelner Datenwert ist, die sich auf eine ungefähre Ableitung des Werts der geschätzten Leistung der Photovoltaikanlage am k-ten Tag bezieht.

9. Verfahren nach einem der Ansprüche 1 bis 8, wobei der mindestens eine der berechneten KPIs, der verwendet wird, um die Differenz zwischen Wert der erzeugten Leistung und dem Wert der geschätzten Leistung der Photovoltaikanlage zu erkennen, mit der folgenden Formel berechnet wird

$$KPI_k[6] = \frac{1}{n}\sum_{i=1}^{n}\left|x_{k_i} - \hat{x}_{k_i}\right|$$

wobei $x_k$ ein einzelner Datenwert ist, der sich auf den Wert der erzeugten Leistung der Photovoltaikanlage am k-ten Tag bezieht, und $\hat{x}_k$ ein einzelner Datenwert ist, der sich auf den Wert der geschätzten Leistung der Photovoltaikanlage am k-ten Tag bezieht.

10. Verfahren nach einem der Ansprüche 1 bis 9, wobei der mindestens eine der berechneten KPIs, der verwendet wird, um die Asymmetrie der Leistungsform zwischen Morgen und Abend in Bezug auf den Wert der geschätzten Leistung der Photovoltaikanlage zu erkennen, mit der folgenden Formel berechnet wird

$$KPI_k[7] = \frac{1}{n}\sum_{i=1}^{n}\left|x_{ke_i} - \hat{x}_{ke_i}\right| - \frac{1}{n}\sum_{i=1}^{n}\left|x_{km_i} - \hat{x}_{km_i}\right|$$

wobei $x_{ke_i}$ ein einzelner i-ter Datenwert ist, der sich auf den Wert der erzeugten Leistung der Photovoltaikanlage nach dem Sonnenhöchststand am k-ten Tag bezieht, $\hat{x}_{ke_i}$ ein einzelner i-ter Datenwert ist, der sich auf den Wert der geschätzten Leistung der Photovoltaikanlage nach dem Sonnenhöchststand am k-ten Tag bezieht, $x_{km_i}$ ein einzelner i-ter Datenwert ist, der sich auf den Wert der erzeugten Leistung der Photovoltaikanlage vor dem Sonnenhöchststand am k-ten Tag bezieht, und $\hat{x}_{km_i}$ ein einzelner i-ter Datenwert ist, der sich auf den Wert der geschätzten Leistung der Photovoltaikanlage vor dem Sonnenhöchststand am k-ten Tag bezieht, wobei vorzugsweise die niedrigsten 5% der Leistungswerte und die höchsten 5% der Leistungswerte bei der Berechnung dieses KPI nicht verwendet werden.

11. Verfahren nach einem der Ansprüche 1 bis 10, wobei der mindestens eine der berechneten KPIs, der die Differenz zwischen dem Wert der erzeugten Leistung der Photovoltaikanlage und der geschätzten Leistung der Photovoltaikanlage am Morgen bestimmt, mit der folgenden Formel berechnet wird

$$KPI_k[8] = \frac{\hat{t}_k[2] - \hat{t}_k[1]}{2N}\sum_{n=1}^{N}\left(x_k[n] - \hat{x}_k[n]\right) + \left(x_k[n+1] - \hat{x}_k[n+1]\right)$$

wobei $\hat{t}_k[1]$ ein Zeitpunkt eines ersten Werts der geschätzten Leistung größer als der Schwellenwert T ist und $\hat{t}_k[2]$ ein Zeitpunkt ist, zu dem der Wert der geschätzten Leistung nicht mehr ansteigt, $x_k[n]$ ein einzelner n-ter Datenwert ist, der sich auf den Wert der erzeugten Leistung der Photovoltaikanlage am k-ten Tag bezieht, und $\hat{x}_k[n]$ ein einzelner n-ter Datenwert ist, der sich auf den Wert der geschätzten Leistung der Photovoltaikanlage am k-ten Tag bezieht, wobei vorzugsweise ein 24-Stunden-Tag in eine Tageszeit umgewandelt wird, die einen Wert von 0 bis 1 hat, wobei ein Wert von 0,5 die Zeit eines Sonnenhöchststands bedeutet.

12. Verfahren nach einem der Ansprüche 1 bis 11, wobei der mindestens eine der berechneten KPIs, der die Differenz zwischen Wert der erzeugten Leistung der Photovoltaikanlage und der geschätzten Leistung der Photovoltaikanlage am Abend bestimmt, mit der folgenden Formel berechnet wird

$$KPI_k[9] = \frac{\hat{\tau}_k[4] - \hat{\tau}_k[3]}{2N} \sum_{n=1}^{N} (x_k[n] - \hat{x}_k[n]) + (x_k[n+1] - \hat{x}_k[n+1])$$

wobei $\hat{\tau}_k[3]$ ein Zeitpunkt eines ersten Werts der geschätzten Leistung ist, der zu sinken beginnt, und $\hat{\tau}_k[4]$ ein Zeitpunkt eines letzten Werts der geschätzten Leistung ist, der größer als der Schwellenwert T ist, $x_k[n]$ ein einzelner n-ter Datenwert ist, der sich auf den Wert der erzeugten Leistung der Photovoltaikanlage am k-ten Tag bezieht, und $\hat{x}_k[n]$ ein einzelner n-ter Datenwert ist, der sich auf den Wert der geschätzten Leistung der Photovoltaikanlage am k-ten Tag bezieht, wobei vorzugsweise ein 24-Stunden-Tag in eine Tageszeit umgewandelt wird, die einen Wert von 0 bis 1 hat, wobei ein Wert von 0,5 die Zeit eines Sonnenhöchststands bedeutet.

13. Verfahren nach einem der Ansprüche 1 bis 12, wobei der mindestens eine der berechneten KPIs, der verwendet wird, um Tage mit keinerlei Leistungserzeugung zu erkennen, mit der folgenden Formel berechnet wird

$$KPI_k[10] = \frac{n_k - m_k}{n_k}$$

wobei $n_k$ eine Anzahl gemessener Abtastwerte des Werts der erzeugten Leistung der Photovoltaikanlage ist und $m_k$ eine Anzahl der von null verschiedenen Werte der gemessenen Abtastwerte des Werts der erzeugten Leistung der Photovoltaikanlage ist.

14. Verfahren nach einem der Ansprüche 1 bis 13, **dadurch gekennzeichnet, dass** alle KPIs den gleichen Schwellenwert haben, vorzugsweise ist der Schwellenwert 1.

15. Verfahren nach einem der Ansprüche 1 bis 14, **dadurch gekennzeichnet, dass** das Verfahren ferner einen Schritt des Aufteilens (4) des Werts der erzeugten Leistung der Photovoltaikanlage nach Tagen umfasst.

16. Verfahren nach einem der Ansprüche 1 bis 15, **dadurch gekennzeichnet, dass** der eine oder mehrere KPIs für jeden vollen Tag separat berechnet werden, wobei ausgewählte KPIs anhand von Zeitreihendaten berechnet werden und anschließend die ausgewählten KPIs mit Schwellenwerten verglichen werden, um Tage zu erkennen, an denen der Wechselrichter nicht wie erwartet arbeitet.

17. Verfahren nach einem der Ansprüche 1 bis 16, **dadurch gekennzeichnet, dass** eine oder mehrere der folgenden Störungen erkannt werden: keinerlei Erzeugung, reduzierte Erzeugung, Begrenzung, Fluktuation, Asymmetrie, ungewöhnliche Leistung, Form, Anomalie beim Anfahren, Anomalie beim Abschalten.

18. Verfahren nach einem der Ansprüche 1 bis 17, **dadurch gekennzeichnet, dass** ein oder mehrere KPIs visualisiert und anschließend angezeigt oder gedruckt werden.

**Revendications**

1. Procédé de détection et d'identification d'un dysfonctionnement d'une installation photovoltaïque comprenant un seul panneau photovoltaïque ou un ensemble de panneaux photovoltaïques connectés, ledit procédé comprenant les étapes suivantes

   - mesurer (1) une valeur de puissance générée de l'installation photovoltaïque,
   - obtenir (2) une puissance estimée de l'installation photovoltaïque,
   **caractérisé en ce qu'**il comprend en outre les étapes suivantes :

   - obtenir (3) une heure solaire d'un emplacement de l'installation photovoltaïque,
   - extraire (5) un lever de soleil et un coucher de soleil d'un emplacement de l'installation photovoltaïque pour chaque jour,
   - calculer (7) un ou plusieurs indicateurs clés de performance, KPI, sur la base de la valeur de puissance générée de l'installation photovoltaïque et de la puissance estimée de l'installation photovoltaïque,
   - identifier (8) si l'un des KPI calculés dépasse un seuil prédéfini, et

- agir (9) selon qu'au moins un des KPI calculés dépasse la valeur seuil ou qu'aucun des KPI ne dépasse la valeur seuil, l'étape d'action (9) sur la base d'au moins un des KPI calculés comprenant au moins l'une des actions suivantes :

- tracer au moins un KPI en fonction du temps et indiquer si la valeur de KPI dépasse un seuil prédéfini,
- régler une alarme,
- diagnostiquer une cause première la mauvaise performance du système,
- planifier des actions de maintenance, et/ou
- mettre en marche une source de puissance supplémentaire pour compenser une puissance inférieure générée par l'installation photovoltaïque,

dans lequel le procédé comprend en outre une étape de normalisation (6) de la valeur de puissance générée de l'installation photovoltaïque, et dans lequel au moins un des KPI calculés définit une production de puissance réduite, et/ou

dans lequel au moins un des KPI calculés définit la différence entre l'heure prédite et l'heure mesurée du lever de soleil, et/ou

dans lequel au moins un des KPI calculés définit la différence entre l'heure prédite et l'heure mesurée du coucher de soleil, et/ou

dans lequel au moins un des KPI calculés définit une différence de longueur de jour, qui est une différence entre une longueur de jour prédite et une longueur de jour mesurée, et/ou

dans lequel au moins un KPI basé sur un histogramme est utilisé pour détecter une limitation de la valeur de puissance générée de l'installation photovoltaïque, dans lequel un histogramme de signal x'$_k$ correspondant à la valeur de puissance générée au cours du k$^{ème}$ jour est calculé, et/ou

dans lequel au moins un des KPI calculés est utilisé pour détecter une gigue journalière, et/ou

dans lequel au moins un des KPI calculés est utilisé pour détecter la différence entre la valeur de puissance générée et la valeur de puissance estimée de l'installation photovoltaïque, et/ou

dans lequel au moins un des KPI calculés est utilisé pour détecter une asymétrie de forme de puissance entre le matin et le soir par rapport à la valeur de puissance estimée de l'installation photovoltaïque, et/ou

dans lequel au moins un des KPI calculés détermine la différence entre la valeur de puissance générée de l'installation photovoltaïque et la puissance estimée de l'installation photovoltaïque au cours de la matinée, et/ou

dans lequel au moins un des KPI calculés détermine la différence entre la valeur de puissance générée de l'installation photovoltaïque et la puissance estimée de l'installation photovoltaïque au cours de la soirée, et/ou

dans lequel au moins un des KPI calculés est utilisé pour détecter les jours où la production de puissance est nulle.

2. Procédé selon la revendication 1, dans lequel l'étape de normalisation (6) de la valeur de puissance générée de l'installation photovoltaïque est calculée à l'aide d'une formule

$$\widetilde{x_k} = \frac{x_k - \hat{x}_k}{\hat{x}_k}$$

où $x_k$ est une donnée unique relative à la valeur de puissance générée de l'installation photovoltaïque au k$^{ème}$ jour, et $\hat{x}_k$ est une donnée unique relative à la valeur de puissance estimée de l'installation photovoltaïque au k$^{ème}$ jour, où de préférence, les valeurs $\widetilde{x_k}$ inférieures à 2 % des valeurs de puissance générées sont remplacées par des zéros.

3. Procédé selon la revendication 2, dans lequel l'au moins un des KPI calculés définissant la production de puissance réduite est calculé à l'aide d'une formule

$$KPI_k[11] = \begin{cases} \dfrac{\overline{\widetilde{x}_k}}{0,1}, \sigma_k < 0,1 \\ \dfrac{\overline{\widetilde{x}_k}}{\sigma_k}, \sigma_k \geq 0,1 \end{cases}$$

où un écart-type $\sigma k$ de la puissance normalisée est calculé à l'aide d'une formule

$$\sigma_k = \sqrt{\frac{\sum_{i=1}^{N}(\breve{x}_{k_i} - \overline{\breve{x}_k})^2}{N-1}}$$

**4.** Procédé selon l'une quelconque des revendications 1 à 3, dans lequel l'au moins un des KPI calculés définissant la différence entre l'heure prédite et l'heure mesurée du lever de soleil est calculé à l'aide d'une formule

$$KPI_k[1] \;=\; \hat{\tau}_k[r] - \tau_k[r]$$

où $\hat{\tau}_k[r]$ est l'heure prédite du lever de soleil et $\tau_k[r]$ est l'heure mesurée du lever de soleil, et de manière davantage préférée, l'heure prédite du lever de soleil est calculée à l'aide d'un modèle de ciel dégagé et l'heure mesurée du lever de soleil est calculée à l'aide d'une formule

$$\tau_k[r] = \tau_k[n] + (\tau_k[n+1] - \tau_k[n])\frac{T_k - x_k[n]}{x_k[n+1] - x_k[n]}$$

où $\tau_k[r]$ est l'heure du lever de soleil au k$^{ème}$ jour, $\tau_k[n]$ et $\tau_k[n+1]$ constituent une paire où $\tau_k[n]$ est une heure d'une mesure au cours du k$^{ème}$ jour avec une valeur de puissance générée inférieure à $T_k$ et où $\tau_k[n+1]$ est une heure d'une mesure ultérieure avec la valeur de puissance générée supérieure à $T_k$, et $T_k$ est égal à $0,1 \cdot p90_k$, où $p90_k$ est un 90$^{ème}$ centile calculé sur la valeur de puissance générée et $x_k[n]$ est une n$^{ième}$ donnée unique relative à la valeur de puissance générée de l'installation photovoltaïque au k$^{ème}$ jour, dans lequel de préférence, un jour de 24 heures est converti en une heure de jour ayant une valeur de 0 à 1, où une valeur de 0,5 signifie l'heure d'un midi solaire.

**5.** Procédé selon l'une quelconque des revendications 1 à 4, dans lequel l'au moins un des KPI calculés définissant la différence entre l'heure prédite et l'heure mesurée du coucher de soleil est calculé à l'aide d'une formule

$$KPI_k[2] \;=\; \hat{\tau}_k[s] - \tau_k[s]$$

où $\hat{\tau}_k[s]$ est l'heure prédite du coucher de soleil et $\tau_k[s]$ est l'heure mesurée du coucher de soleil, et de manière davantage préférée, l'heure prédite du coucher de soleil est calculée à l'aide d'un modèle de ciel dégagé et l'heure mesurée du coucher de soleil est calculée à l'aide d'une formule

$$\tau_k[s] = \tau_k[n] + (\tau_k[n+1] - \tau_k[n])\frac{T_k - x_k[n]}{x_k[n+1] - x_k[n]}$$

où $\tau_k[s]$ est l'heure du coucher de soleil au k$^{ème}$ jour, $\tau_k[n]$ et $\tau_k[n+1]$ constituent une paire où $\tau_k[n]$ est une heure d'une mesure au cours du k$^{ème}$ jour avec une valeur de puissance générée supérieure à $T_k$ et où $\tau_k[n+1]$ est une heure d'une mesure ultérieure avec la valeur de puissance générée inférieure à $T_k$, et $T_k$ est égal à $0,1 \cdot p90_k$, où $p90_k$ est un 90$^{ème}$ centile calculé sur la valeur de puissance générée et $x_k[n]$ est une n$^{ième}$ donnée unique relative à la valeur de puissance générée de l'installation photovoltaïque au k$^{ème}$ jour, dans lequel de préférence, un jour de 24 heures est converti en une heure de jour ayant une valeur de 0 à 1, où une valeur de 0,5 signifie l'heure d'un midi solaire.

**6.** Procédé selon l'une quelconque des revendications 1 à 5, dans lequel l'au moins un des KPI calculés définissant la différence de longueur de jour est calculé à l'aide d'une formule

$$KPI_k[3] \;=\; (\hat{\tau}_k[s] - \hat{\tau}_k[r]) - (\tau_k[s] - \tau_k[r])$$

où $\hat{\tau}_k[s]$ est l'heure prédire du coucher de soleil, $\hat{\tau}_k[r]$ est une heure prédire d'un lever de soleil, $\tau_k[s]$ est l'heure du coucher de soleil au k$^{ème}$ jour, et $\tau_k[r]$ est l'heure du lever de soleil au k$^{ème}$ jour, dans lequel de préférence, un jour de 24 heures est converti en une heure de jour ayant une valeur de 0 à 1, où une valeur de 0,5 signifie l'heure d'un midi solaire.

7.  Procédé selon l'une quelconque des revendications 1 à 6, dans lequel l'au moins un KPI basé sur un histogramme est utilisé pour détecter la limitation de la valeur de puissance générée de l'installation photovoltaïque, dans lequel l'histogramme du signal x'$_k$ correspondant à la valeur de puissance générée au cours du k$^{ème}$ jour est calculé, de préférence sans les premiers 10 % et les derniers 10 % des données correspondant à la valeur de puissance générée de l'installation photovoltaïque peu de temps après le lever de soleil ou avant le coucher de soleil, et de manière davantage préférée une valeur nulle unique est ajoutée au signal x'$_k$, dans lequel de préférence, l'histogramme divise les données en 200 bacs, est calculé à l'aide d'une formule

$$KPI_k[4] = \frac{10 \cdot h[200]^2}{\sum_{i=191}^{200} h[i]}$$

où h[i] est un i$^{ème}$ élément de l'histogramme.

8.  Procédé selon l'une quelconque des revendications 1 à 7, dans lequel l'au moins un des KPI calculés utilisé pour détecter la gigue journalière est calculé à l'aide d'une formule

$$KPI_k[5] = \sqrt{\frac{\sum_{i=1}^{N}\left(dx_{k_i} - \overline{dx_k}\right)^2}{N-1}} - \sqrt{\frac{\sum_{i=1}^{N}(d\hat{x}_{k_i} - \overline{d\hat{x}_k})^2}{N-1}}$$

où $dx_k$ est une donnée unique relative à une dérivée approximative de la valeur de puissance générée de l'installation photovoltaïque au k$^{ème}$ jour, et $d\hat{x}_k$ est une donnée unique relative à une dérivée approximative de la valeur de puissance estimée de l'installation photovoltaïque au k$^{ème}$ jour.

9.  Procédé selon l'une quelconque des revendications 1 à 8, dans lequel l'au moins un des KPI calculés utilisé pour détecter la différence entre la valeur de puissance générée et la valeur de puissance estimée de l'installation photovoltaïque est calculé à l'aide d'une formule

$$KPI_k[6] = \frac{1}{n}\sum_{i=1}^{n}\left|x_{k_i} - \hat{x}_{k_i}\right|$$

où $x_k$ est une donnée unique relative à la valeur de puissance générée de l'installation photovoltaïque au k$^{ème}$ jour, et $\hat{x}_k$ est une donnée unique relative à la valeur de puissance estimée de l'installation photovoltaïque au k$^{ème}$ jour.

10. Procédé selon l'une quelconque des revendications 1 à 9, dans lequel l'au moins un des KPI calculés utilisé pour détecter l'asymétrie de forme de puissance entre le matin et le soir par rapport à la valeur de puissance estimée de l'installation photovoltaïque est calculé à l'aide d'une formule

$$KPI_k[7] = \frac{1}{n}\sum_{i=1}^{n}\left|x_{ke_i} - \hat{x}_{ke_i}\right| - \frac{1}{n}\sum_{i=1}^{n}\left|x_{km_i} - \hat{x}_{km_i}\right|$$

dans lequel $X_{kei}$ est une i$^{ème}$ donnée unique relative à la valeur de puissance générée de l'installation photovoltaïque après le midi solaire au k$^{ème}$ jour, $\hat{x}_{kei}$ est une i$^{ème}$ donnée unique relative à la valeur de puissance estimée de l'installation photovoltaïque après le midi solaire au k$^{ème}$ jour, $x_{kmi}$ est une i$^{ème}$ donnée unique relative à la valeur de puissance générée de l'installation photovoltaïque avant le midi solaire au k$^{ème}$ jour, et $\hat{x}_{kmi}$ est une i$^{ème}$ donnée unique relative à la valeur de puissance estimée de l'installation photovoltaïque avant le midi solaire au k$^{ème}$ jour, de préférence les 5 % des valeurs de puissance les plus faibles et les 5 % des valeurs de puissance les plus élevée ne sont pas utilisés lors du calcul de ce KPI.

11. Procédé selon l'une quelconque des revendications 1 à 10, dans lequel l'au moins un des KPI calculés déterminant la différence entre la valeur de puissance générée de l'installation photovoltaïque et la puissance estimée de l'installation photovoltaïque au cours de la matinée est calculé à l'aide d'une formule

$$KPI_k[8] = \frac{\hat{\tau}_k[2] - \hat{\tau}_k[1]}{2N} \sum_{n=1}^{N} (x_k[n] - \hat{x}_k[n]) + (x_k[n+1] - \hat{x}_k[n+1])$$

dans lequel $\hat{\tau}_k[1]$ est une heure d'une première valeur de puissance estimée supérieure au seuil T et $\hat{\tau}_k[2]$ est une heure où la valeur de puissance estimée cesse d'augmenter, $x_k[n]$ est une n$^{ième}$ donnée unique relative à la valeur de puissance générée de l'installation photovoltaïque au k$^{ème}$ jour et $\hat{\tau}_k[n]$ est une n$^{ième}$ donnée unique relative à la valeur de puissance estimée de l'installation photovoltaïque au k$^{ème}$ jour, dans lequel de préférence, un jour de 24 heures est converti en une heure de jour ayant une valeur de 0 à 1, où une valeur de 0,5 signifie l'heure d'un midi solaire.

**12.** Procédé selon l'une quelconque des revendications 1 à 11, dans lequel l'au moins un des KPI calculés déterminant la différence entre la valeur de puissance générée de l'installation photovoltaïque et la puissance estimée de l'installation photovoltaïque au cours de la soirée est calculé à l'aide d'une formule

$$KPI_k[9] = \frac{\hat{\tau}_k[4] - \hat{\tau}_k[3]}{2N} \sum_{n=1}^{N} (x_k[n] - \hat{x}_k[n]) + (x_k[n+1] - \hat{x}_k[n+1])$$

dans lequel $\hat{\tau}_k[3]$ est une heure d'une première valeur de puissance estimée qui commence à augmenter et $\hat{\tau}_k[4]$ est une heure d'une dernière valeur de puissance estimée supérieure au seuil T, $x_k[n]$ est une n$^{ième}$ donnée unique relative à la valeur de puissance générée de l'installation photovoltaïque au k$^{ème}$ jour et $\hat{x}_k[n]$ est une n$^{ième}$ donnée unique relative à la valeur de puissance estimée de l'installation photovoltaïque au k$^{ème}$ jour, dans lequel de préférence, un jour de 24 heures est converti en une heure de jour ayant une valeur de 0 à 1, où une valeur de 0,5 signifie l'heure d'un midi solaire.

**13.** Procédé selon l'une quelconque des revendications 1 à 12, dans lequel l'au moins un des KPI calculés utilisé pour détecter les jours où la production de puissance est nulle est calculé à l'aide d'une formule

$$KPI_k[10] = \frac{n_k - m_k}{n_k}$$

dans lequel $n_k$ est un nombre d'échantillons mesurés de la valeur de puissance générée de l'installation photo-voltaïque et $m_k$ est un nombre de valeurs non nulles d'échantillons mesurés de la valeur de puissance générée de l'installation photovoltaïque.

**14.** Procédé selon l'une quelconque des revendications 1 à 13, **caractérisé en ce que** tous les KPI on la même valeur seuil, de préférence la valeur seuil est 1.

**15.** Procédé selon l'une quelconque des revendications 1 à 14, **caractérisé en ce que** le procédé comprend en outre une étape de fractionnement (4) de la valeur de puissance générée de l'installation photovoltaïque par jour.

**16.** Procédé selon l'une quelconque des revendications 1 à 15, **caractérisé en ce que** les un ou plusieurs KPI sont calculés pour chaque jour complet séparément, dans lequel les KPI sélectionnés sont calculés sur des données de séries temporelles et par la suite, les KPI sélectionnés sont comparés à des valeurs seuils pour détecter les jours où l'onduleur ne fonctionne pas comme prévu.

**17.** Procédé selon l'une quelconque des revendications 1 à 16, **caractérisé en ce qu'**un ou plusieurs des dysfonctionnements suivants est détecté : une production nulle, une production réduite, une limitation, une fluctuation, une asymétrie, une puissance inhabituelle, une forme, une anomalie au démarrage, une anomalie à l'arrêt.

**18.** Procédé selon l'une quelconque des revendications 1 à 17, **caractérisé en ce qu'**un ou plusieurs KPI sont visualisés puis affichés ou imprimés.

Power Input **1**

Estimated Power Input **2**

Solar Time **3**

Start

Split signals by days **4**

Extract Sunrise and Sunset for Each Day **5**

Normalize Signals **6**

Compute KPIs **7**

Identify KPIs Exceeding Thresholds **8**

Taking action based on at least one of the computed KPIs **9**

End

# Fig. 1

**Fig. 2**

**Fig. 3**

**KPI [4] – limiting**

**Measured and Estimated Power Generation**

**Scaled Estimated and Generated Power**

**Difference of Actual and Estimated power**

**Power Normalized to Zero**

**Fig. 4**

**Fig. 5**

**Fig. 6**

**Fig. 7**

EP 3 846 338 B1

**Fig. 8**

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014188410 A1
- EP 0677749 A2
- EP 2293089 A1
- JP 2012054401 A
- JP 2012124188 A